# FASCICULE DE BREVET EUROPEEN

(11) **EP 1 347 827 B1**
(45) Date de publication et mention de la délivrance du brevet: **22.10.2014**
(21) Numéro de dépôt: 01995761.2
(22) Date de dépôt: 21.12.2001
(51) Int. Cl.: B01J 19/00, C01B 13/02, C01B 11/02, B01J 14/00, B01J 19/24

(54) **PROCEDE POUR LA MISE EN OEUVRE D'UNE REACTION EN MILIEU LIQUIDE AVEC DEGAGEMENT GAZEUX**
VERFAHREN ZUR DURCHFÜHRUNG EINER REAKTION IN FLÜSSIGMEDIUM UNTER GASENTWICKLUNG
METHOD FOR CARRYING OUT A REACTION IN LIQUID MEDIUM WITH GAS EVOLUTION

(30) Priorité: 28.12.2000 FR 0017199
(43) Date de publication de la demande: 01.10.2003
(60) Demande divisionnaire: 10184376.1
(73) Titulaire: ARKEMA FRANCE, 92700 Colombes (FR)
(72) Inventeur: RICARD, Jean-Philippe, F- 92300 Levallois-Perret (FR); CHOUPEAUX, Joel, F- 56350 Allaire (FR); DELASSUS, Jean-Michel, F- 94000 Creteil (FR)
(74) Mandataire: Hirsch & Associés
(86) Numéro de dépôt international: PCT/FR2001/004158
(87) Numéro de publication internationale: WO 2002/053277

(56) Documents cités:
- EP-A- 0 150 835
- DE-A- 3 723 799
- US-A- 5 354 435
- US-A- 5 633 329

## Description

L'invention concerne un procédé pour la mise en oeuvre d'une réaction en milieu liquide au cours de laquelle il se produit un dégagement gazeux.

Elle peut s'appliquer, notamment, à une réaction mettant en oeuvre un peroxyde tel que le peroxyde d'hydrogène et, en particulier, à la réduction du chlore contenu dans un effluent aqueux.

Il est connu de réduire le chlore ayant un degré d'oxydation supérieur ou égal à zéro au moyen de peroxyde d'hydrogène.

A titre d'exemples, on peut citer les réactions connues suivantes :

NaClO + H₂O₂ → NaCl + O₂ + H₂O

ClOH + H₂O₂ → HCl + O₂ + H₂O

Cl₂ + H₂O₂ → O₂ + 2HCl

On connaît aussi, d'après la demande de brevet européen n° 863 218, un procédé de récupération de germanium à partir d'effluents gazeux provenant de dépôts chimiques en phase vapeur, qui comporte une étape où on réduit dans un mélangeur, à l'aide d'un peroxyde tel que le peroxyde d'hydrogène, des ions hypochlorite (ClO⁻) en ions chlorure (Cl⁻).

Un autre procédé, décrit dans le brevet américain n° 5 354 435 propose de produire du dioxyde de chlore à partir d'une solution d'acide chlorique (HClO₃). Ce procédé comporte une étape au cours de laquelle on fait réagir, dans un réacteur conique, une solution d'acide chlorique avec un agent réducteur tel que le peroxyde d'hydrogène.

Comme le montrent les réactions ci-dessus, il se forme un dégagement d'oxygène qui provoque normalement un moussage important. Ce moussage étant gênant, on l'évite généralement en introduisant dans le milieu réactionnel un agent antimousse chimique.

Une autre solution consiste à casser la mousse formée au moyen d'équipements spécifiques prévus dans les réacteurs, par exemple, par aspersion en surface, ou au moyen d'un agitateur circulant en surface dans la masse foisonnante.

DE 3 723 799 décrit un procédé de production de dioxyde de chlore. Il décrit aussi un réacteur cyclonique pour la mise en oeuvre de ce procédé. US 5 633 329 décrit un dispositif comprenant un mélangeur statique relié a un réacteur cyclonique et l'utilisation du dispositif dans des procédés de polymérisation.

L'invention a donc pour but de proposer un équipement simple, économique, facile à utiliser et qui permette, d'une part, de mettre en oeuvre la réaction dans des conditions assurant une grande sécurité, et d'autre part, d'obtenir une cinétique, un rendement et une productivité élevés.

L'invention a pour objet un procédé dans lequel on met en oeuvre une réaction en milieu liquide au cours de laquelle il se produit un dégagement gazeux, ce procédé étant caractérisé en ce qu'il comprend les étapes suivantes :
- on introduit le milieu liquide dans un mélangeur statique, ledit milieu liquide comprenant au mains deux réactifs A et B par deux conduites d'alimentation et et on laisse la réaction débuter;
- on transfert le milieu réactionnel du mélangeur statique vers un réacteur cyclonique muni d'une cheminée pour l'évacuation du ou des gaz formé(s) et de moyens d'évacuation du milieu liquide;
- on laisse la réaction se poursuivre dans le réacteur cyclonique; et
- on récupère le milieu liquide sortant en pied du réacteur cyclonique par les moyens d'évacuation; et
- on récupère le ou les gaz formé(s) par la cheminée.

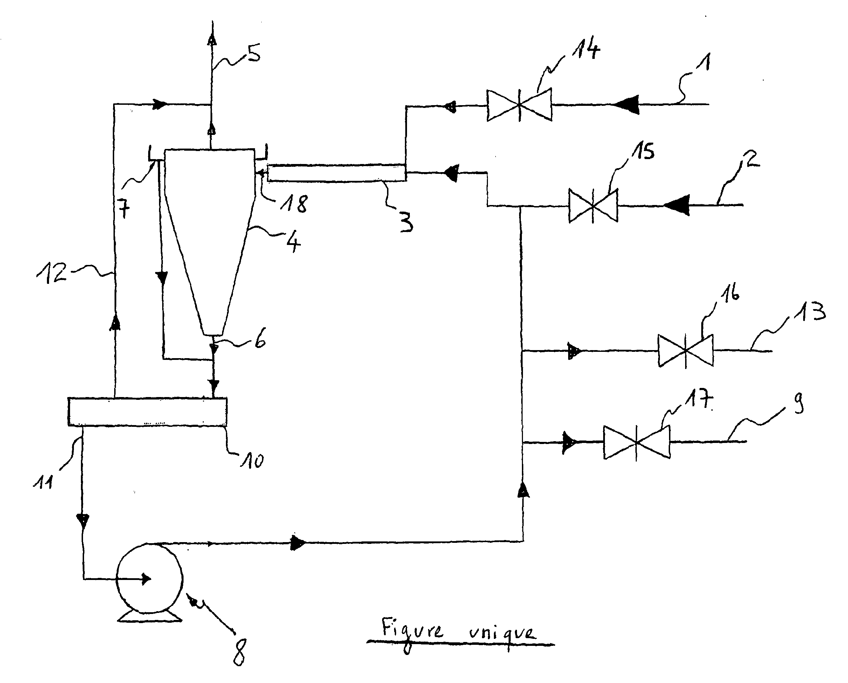

D'autres caractéristiques et avantages de l'invention apparaîtront à la lecture de l'exposé qui suit et qui est donné en référence à la figure unique annexée, qui représente schématiquement le dispositif sous sa forme de réalisation préférée.

### EXPOSE DETAILLE DE L'INVENTION

### Dispositif

La figure unique annexée représente le dispositif, sous sa forme préférée.

Ce dispositif repose sur la combinaison d'au moins deux équipements :
- un mélangeur statique 3 dans lequel débouche deux conduites 1, 2 d'alimentation en milieu liquide;
- un réacteur cyclonique 4 relié audit mélangeur statique 3 et muni d'une cheminée 5 pour l'évacuation du ou des gaz formé (s) et de moyens d'évacuation 6,7 du milieu liquide.

Le mélangeur statique 3 est de type classique, il peut par exemple être constitué d'éléments hélicoïdaux.

Le réacteur cyclonique 4 est également de type classique. Il présente globalement une forme conique ou tronconique dont le sommet constitue la partie inférieure. La partie inférieure peut en outre être équipée d'un dispositif antivortex (non représenté).

Le réacteur cyclonique 4 est alimenté en milieu liquide à sa partie supérieure par une conduite 18 qui le relie à la sortie du mélangeur statique 3.

De préférence, cette conduite 18 reliant la sortie du mélangeur 3 au réacteur cyclonique 4 est disposée de telle sorte que le milieu réactionnel entre de manière tangentielle dans le réacteur cyclonique 4. Ceci permet en effet un meilleur dégagement des gaz contenus dans le milieu liquide.

Les moyens d'évacuation 6 du réacteur cyclonique 4 servent à évacuer le milieu liquide de ce réacteur.

L' exhaure peut être réalisée au moyen d'une tuyauterie 6 située en partie inférieure du réacteur cyclonique 4.

Selon un mode de réalisation préféré du dispositif, le mélangeur statique 3 est alimenté, outre par la première conduite 1, par au moins une seconde conduite d'alimentation 2.

Selon un autre mode de réalisation préféré du dispositif, une partie du milieu liquide recueilli par la gouttière 7 et la tuyauterie 6 est réinjectée dans l'une ou l'autre des conduites d'alimentation 1 ou 2, en général par passage au travers d'une pompe 8, l'ensemble du dispositif créant alors une boucle ou recirculation.

Le restant du liquide est alors éliminé de la boucle au moyen d'une conduite d'export 9.

La détermination de la quantité de milieu liquide à réinjecter dans la conduite d'alimentation 1 ou 2 peut être calculée à partir des concentrations mesurées par une sonde de dosage (non représentée) et alimentée par une conduite de dosage 13 située de préférence entre la pompe 8 et l'une des conduites d'alimentation 1 et 2. Bien entendu, la quantité de milieu liquide prélevé par la conduite de dosage 13 est négligeable.

Les débits à travers les différentes conduites 1, 2, 9 et 13 sont réglés au moyen de vannes de débit numérotées 14, 15, 16 et 17, respectivement.

La réalisation d'une boucle apporte l'avantage supplémentaire de permettre d'ajuster la température du milieu réactionnel aux conditions optimales de cinétique réactionnelle et de dégazage. Ceci peut impliquer, par exemple, un refroidissement en cas d'exothermie. Cette boucle peut aussi permettre d'assurer une vitesse minimale au sein du mélangeur statique.

Afin d'améliorer encore l'élimination du ou des gaz contenu(s) dans le milieu liquide, il est souhaitable de prévoir un séparateur gaz-liquide 10 qui peut être un coalesceur et qui est relié aux moyens d'évacuation 6 et 7 du réacteur cyclonique 4. En cas de présence d'une pompe 8 dans le dispositif, l'orifice de sortie du séparateur 10 alimente le côté amont de la pompe 8 par la conduite 11.

Ainsi, comme on peut le voir sur la figure, le milieu liquide provenant de la gouttière 7 et de la tuyauterie 6 subit une séparation supplémentaire dans le coalesceur 10.

Le ou les gaz sortant du coalesceur 10 peuvent alors rejoindre par une conduite 12 la cheminée 5, et le milieu liquide débarrassé des gaz sort du coalesceur 10 par la conduite 11 qui l'amène du côté amont de la pompe 8.

Selon un mode de réalisation avantageux de l'invention, il est prévu des moyens (non représentés) pour introduire dans le réacteur cyclonique 4 de l'air ou un gaz inerte. Ceci permet d'éviter l'accumulation dans le réacteur cyclonique 4 du ou des gaz produits par la réaction, ce qui dans certains cas pourrait créer un milieu inflammable ou explosif.

Des moyens peuvent également être prévus pour chauffer ou refroidir le mélangeur 3 et/ou le réacteur cyclonique 4.

Le dispositif peut être utilisé pour mettre en oeuvre toute réaction en milieu liquide au cours de laquelle il se forme un gaz susceptible d'entraîner la formation de mousse et notamment une réaction mettant en oeuvre un peroxyde. Son fonctionnement peut être continu ou discontinu.

Le dispositif peut être avantageusement utilisé comme installation de déchloration, notamment pour réduire le chlore contenu dans des effluents aqueux.

### Procédé selon l'invention

Le procédé selon l'invention peut être mis en oeuvre à l'aide du dispositif qui vient d'être décrit.

En reprenant la numérotation du dispositif utilisée ci-dessus, le procédé selon l'invention comprend donc les étapes suivantes :
- on introduit le milieu liquide dans le mélangeur statique 3 et on démarre la réaction dans ledit mélangeur statique 3;
- on transfert le milieu réactionnel du mélangeur statique 3 vers un réacteur cyclonique 4;
- on laisse la réaction se poursuivre dans le réacteur cyclonique 4; et
- on récupère le milieu liquide sortant au pied du réacteur cyclonique 4, éventuellement après son passage dans un séparateur gaz/liquide 10.

En général, la réaction débute dans le mélangeur statique 3 et se termine dans le réacteur cyclonique, ce qui rend possible un désengagement du ou des gaz formés en un temps très court.

La réaction se poursuit généralement dans le réacteur cyclonique d'abord sur la surface, puis dans le volume de fond qui peut être ajusté par régulation de niveau.

Dans le mélange statique 3, on atteint en général un taux d'avancement de la réaction de 80 à 95%, ce qui permet d'atteindre de grandes vitesses dans le réacteur cyclonique 4.

Lorsque le milieu liquide est extrait par la tuyauterie 6, le fond du réacteur cyclonique 4 joue alors le rôle de finisseur.

Selon un mode de réalisation préféré, on introduit en outre de l'air ou un gaz inerte dans le réacteur cyclonique 4, ceci pour les raisons évoquées ci-dessus.

Il est également possible de chauffer ou de refroidir le mélangeur 3 et/ou le réacteur cyclonique 4.

Le procédé selon l'invention s'applique à toute réaction en milieu liquide au cours de laquelle il se forme un gaz susceptible d'entraîner la formation de mousse.

Le gaz peut être un produit de la réaction (décomposition) du réactif contenu dans le milieu liquide.

Le milieu liquide peut être un milieu aqueux ou un solvant selon le type de réaction envisagée. De préférence le milieu est aqueux.

Le procédé selon l'invention peut s'appliquer à toute réaction dans un milieu liquide comportant au moins deux réactifs A et B, au cours de laquelle il se forme un gaz susceptible d'entraîner la formation de mousse. Dans ce cas, on utilise un dispositif comportant une première conduite d'alimentation 1 en premier réactif A et une seconde conduite d'alimentation 2 en second réactif B.

Le réactif A peut être un réducteur ou un oxydant.

Si le réactif A est un réducteur, il peut servir par exemple, à réduire un réactif B comprenant un halogène ayant un degré d'oxydation supérieur ou égal à zéro.

Le réactif B peut donc comprendre au moins un composé choisi dans le groupe constitué par les composés chlorés, les composés bromés, et les permanganates tel que le permanganate de sodium ou de potassium.

Comme composés chlorés, on peut citer le chlore, le dioxyde de chlore, les hypochlorites tels que les hypochlorites de sodium ou de calcium, l'acide hypochloreux et les formes solides du chlore.

Comme composés bromés, on peut mentionner le brome, les hypobromites tels que les hypobromites de sodium ou de calcium, et l'acide hypobromeux.

Dans le cas où le réactif A est un oxydant, il peut alors oxyder un réactif B comprenant au moins un composé tel que le chlorite de sodium, de potassium, de calcium, les composés cyanurés, les composés soufrés et le fer ferreux.

Comme réactif A, on peut, par exemple, mettre en oeuvre un réactif comprenant au moins un peroxyde tel que le peroxyde d'hydrogène et les peroxydes de métaux alcalins tels que le sodium ou le potassium. De préférence, on utilise du peroxyde d'hydrogène.

Ainsi, le procédé selon l'invention peut être avantageusement mis à profit pour réduire le chlore contenu dans des effluents aqueux.

Les effluents aqueux, réactif B, comprennent généralement des ions hypochlorite et/ou du chlore et on choisit alors de préférence comme réactif A une solution aqueuse de peroxyde d'hydrogène. Le gaz dégagé est de l'oxygène.

En particulier, le procédé peut être utilisé pour traiter un effluent aqueux comprenant :
de 1 mg/l à 10 g/l et de préférence de 10 mg/l à 4 g/l de Cl₂; et
de 1 mg/l à 250 g/l et de préférence de 10 mg/l à 130 g/l de NaClO.

Le réactif A et/ou le réactif B peuvent en outre comprendre un antimousse classique.

Le procédé selon l'invention est de préférence mis en oeuvre à température et dans les conditions suivantes :
- température : de 0 à 110°C, de préférence de 20 à 80°C;
- pression : 0,5 à 3 bars, de préférence de 0,9 à 1,3 bars;
- pH : de 1 à 14, de préférence de 5 à 12;
- temps de séjour dans le mélangeur statique : 0,001 à 100 secondes, de préférence de 0,02 à 10 secondes;
- temps de séjour dans le réacteur cyclonique : 10 à 400 secondes, de préférence 20 à 100 secondes;
- le séparateur gaz/liquide 10 est un coalesceur dont la vitesse de fonctionnement est de 0,01 à 1 m/s, de préférence de 0,05 à 0,8 m/s.

Il peut être mis en oeuvre de manière continue ou discontinue (en batch).

### Exemple

L'exemple suivant illustre la présente invention sans toutefois en limiter la portée.

On prépare une solution aqueuse A de peroxyde d'hydrogène (H₂O₂) à 35% en poids.

On prépare ensuite une solution aqueuse B ayant la composition suivante :
- NaClO : 79,07 g/l
- NaCl : 62,10 g/l
- Na₂CO₃ : 20 g/l
- H₂O : complément à 1 l

On se munit ensuite d'un équipement tel que celui représenté sur la figure annexée.

Le réacteur a un diamètre de 0,4 m en sa partie supérieure, 0,3 m dans sa partie inférieure et une hauteur de 0,6 m.

Le coalesceur a un diamètre de 0,1 m sur une longueur de 1 m.

Le mélangeur statique a un diamètre de 25 mm et une longueur de 1 m.

La conduite d'alimentation 2 permet d'assurer l'alimentation en solution A avec une vanne de réglage et une mesure de débit, la conduite d'alimentation 1 permet d'assurer l'alimentation en solution B avec vanne de réglage et mesure de débit.

La conduite 9 permet d'assurer l'export de la solution traitée afin d'assurer un niveau constant dans le réacteur cyclonique avec une vanne de réglage, la conduite 13 permet d'assurer l'alimentation d'une sonde de dosage de peroxyde d'hydrogène dans la solution traitée.

Le débit dans le circuit est fixé entre 1 et 5 m³/h.

La solution B est introduite à un débit de 200 1/h dans le circuit, à l'entrée du mélangeur statique 3.

La solution A est alimentée à un débit de 24 1/h dont le réglage se fait à partir des résultats donnés par la sonde de dosage H₂O₂ alimentée par la conduite 13.

Le mélange des solutions A et B permet la formation de l'oxygène issu de la réaction suivante :

NaClO + H₂O₂ →NaCl + O₂ + H₂O

Dans le mélangeur statique 3, environ 90% de la réaction est réalisée, ce qui permet d'atteindre de grandes vitesses avec un temps de séjour inférieur à 1 seconde. La sortie du mélangeur statique 3 vers le réacteur cyclonique 4 est placée de manière tangentielle afin de permettre un désengagement maximum de l'oxygène.

Dans le réacteur cyclonique 4, un niveau est maintenu afin de permettre un temps de séjour supérieur à 20 secondes. Ce temps de séjour permet l'achèvement de la réaction et d'augmenter le désengagement de l'oxygène. Au pied du réacteur cyclonique 4 est placé un coalesceur 10 avec une vitesse de passage inférieure à 1 m/s afin d'assurer la coalescence et le désengagement de microbulles d'oxygène. La sortie liquide 11 du coalesceur 10 permet d'assurer l'alimentation de la pompe 8.

Ainsi, avec un débit fixe de solution B à traiter (200 1/h), l'ajustement du débit de solution A autour de 24 1/h a permis de régler l'excès de H₂O₂ dosé par la sonde entre 30 et 100 mg/l.

## Revendications

1. Procédé dans lequel on met en oeuvre une réaction en milieu liquide au cours de laquelle il se produit un dégagement gazeux, **caractérisé en ce qu'**il comprend les étapes suivantes;
- on introduit le milieu liquide dans un mélangeur statique (3), ledit milieu liquide comprenant au moins deux réactifs A et B par deux conduites d'alimentation (1) et (2) et on laisse la réaction débuter;
- on transfert le milieu réactionnel du mélangeur statique (3) vers un réacteur cyclonique (4) muni d'une cheminée (5) pour l'évacuation du ou des gaz formé(s) et de moyens d'évacuation (6) du milieu liquide;
- on laisse la réaction se poursuivre dans le réacteur cyclonique (4); et
- on récupère le milieu liquide sortant en pied du réacteur cyclonique (4) par les moyens d'évacuation (6); et
- on récupère le ou les gaz formé(s) par la cheminée (5).

2. Procédé selon la revendication 1, **caractérisé en ce que** le milieu réactionnel sortant du mélangeur statique (3) et introduit dans le réacteur cyclonique (4) a un taux d'avancement de réaction compris entre 80 et 95%.

3. Procédé selon la revendication 1 ou 2, **caractérisé en ce que** lesdits moyens d'évacuation du milieu liquide comprennent une tuyauterie (6) située à la partie inférieure du réacteur cyclonique (4).

4. Procédé selon l'une des revendications 1 à 3, **caractérisé en ce que** lesdits moyens d'évacuation (6) sont reliés à la conduite d'alimentation (1), et éventuellement à une conduite d'export (9).

5. Procédé selon l'une des revendications 1 à 4, **caractérisé en ce qu'**un séparateur gaz-liquide (10) est prévu pour recevoir le milieu liquide provenant desdits moyens d'évacuation (6), la sortie (11) des liquides du séparateur gaz-liquide (10) étant, le cas échéant, connectée à la conduite d'alimentation (1).

6. Procédé selon l'une des revendications 1 à 5, **caractérisé en ce qu'**une conduite (18) relie la sortie du mélangeur (3) au réacteur cyclonique (4) de telle sorte que le milieu réactionnel entre de manière tangentielle dans le réacteur cyclonique (4).

7. Procédé selon l'une des revendications 1 à 6, **caractérisé en ce que** des moyens pour introduire dans le réacteur cyclonique de l'air ou un gaz inerte sont prévus.

8. Procédé selon l'une des revendications 1 à 7, **caractérisé en ce que** le réactif A est un réducteur.

9. Procédé selon l'une des revendications 1 à 8, **caractérisé en ce que** le réactif B comprend un halogène ayant un degré d'oxydation supérieur ou égal à zéro.

10. Procédé selon la revendication 9, **caractérisé en ce que** le réactif B comprend au moins un composé choisi dans le groupe constitué par les composés chlorés, les composés bromés, et les permanganates.

11. Procédé selon la revendication 10, **caractérisé en ce que** les composés chlorés sont choisis dans le groupe constitué par le chlore, le dioxyde de chlore, les hypochlorites de sodium ou de calcium, l'acide hypochloreux et les formes solides du chlore.

12. Procédé selon la revendication 10, **caractérisé en ce que** les composés bromés sont choisis dans le groupe constitué dans le groupe constitué par le brome, les hypobromites de sodium ou de calcium, et l'acide hypobromeux.

13. Procédé selon l'une des revendications 1 à 7, **caractérisé en ce que** le réactif A est un oxydant.

14. Procédé selon la revendication 13, **caractérisé en ce que** le réactif A comprend au moins un peroxyde choisi dans le groupe constitué par le peroxyde d'hydrogène et les peroxydes de métaux alcalins.

15. Procédé selon la revendication 13 ou 14, **caractérisé en ce que** le réactif A comprend du peroxyde d'hydrogène.

16. Procédé selon l'une des revendications 13 à 15, **caractérisé en ce que** le réactif B comprend au moins un composé choisi dans le groupe constitué par le chlorite de sodium, les composés cyanurés, les composés soufrés et le fer ferreux.

17. Procédé selon l'une des revendications 1 à 7, **caractérisé en ce que** le réactif B est un effluent aqueux contenant du chlore et le réactif A comprend une solution aqueuse de peroxyde d'hydrogène.

18. Procédé selon la revendication 17, **caractérisé en ce que** l'effluent aqueux comprend des ions hypochlorite et/ou du chlore.

19. Procédé selon la revendication 18, **caractérisé en ce que** l'effluent aqueux comprend:
de 1 mg/l à 10 g/l et de préférence de 10 mg/l à 4 g/l de Cl₂; et
de 1 mg/l à 250 g/l et de préférence de 10 mg/l à 130 g/l de NaClO.

20. Procédé selon l'une des revendications 1 à 19, **caractérisé en ce qu'**il est mis en oeuvre dans les conditions suivantes:
- Température : de 0 à 110°C; de préférence de 20 à 80°C;
- Pression : 0,5 à 3 bars, de préférence de 0,9 à 1,3 bars;
- PH : de 1 à 14, de préférence de 5 à 12;
- temps de séjour dans le mélangeur statique : 0,001 à 100 secondes, de préférence de 0,02 à 10 secondes;
- temps de séjour dans le réacteur cyclonique : 10 à 400 secondes, de préférence 20 à 100 secondes; et
- le séparateur gaz/liquide (10) est un coalesceur dont la vitesse de fonctionnement est de 0,01 à 1 m/s, de préférence de 0,05 à 0,8 m/s.

## Patentansprüche

1. Verfahren, wobei eine Reaktion in flüssigem Medium durchgeführt wird, in deren Verlauf eine Gasentwicklung auftritt, **dadurch gekennzeichnet, dass** es die folgenden Schritte umfasst:
- Einführen des flüssigen Mediums in einen statischen Mischer (3), wobei das flüssige Medium mindestens zwei Reagenzien A und B umfasst, durch zwei Zufuhrleitungen (1) und (2) und Beginnen lassen der Reaktion;
- Übertragen des Reaktionsmediums von dem statischen Mischer (3) in einen Zyklonreaktor (4), der mit einem Kamin (5) zur Ableitung des oder der gebildeten Gase(s) und Mittel zur Ableitung (6) des flüssigen Mediums versehen ist;
- Vollziehen lassen der Reaktion in dem Zyklonreaktor (4); und
- Rückgewinnen des flüssigen Mediums, das am Fuß des Zyklonreaktors (4) durch Ableitungsmittel (6) austritt; und
- Rückgewinnen des oder der gebildeten Gase(s) durch den Kamin (5).

2. Verfahren nach Anspruch 1, **dadurch gekennzeichnet, dass** das Reaktionsmedium, das aus dem statischen Mischer (3) austritt, und in den Zyklonreaktor (4) eingeführt wird zeigt eine Umsatzvariable zwischen 80 und 95 %.

3. Verfahren nach Anspruch 1 oder 2, **dadurch gekennzeichnet, dass** die Mittel zur Ableitung des flüssigen Mediums Rohrleitungen (6) umfassen, die im unteren Teil des Zyklonreaktors (4) liegen.

4. Verfahren nach einem der Ansprüche 1 bis 3, **dadurch gekennzeichnet, dass** die Ableitungsmittel (6) mit der Zufuhrleitung (1), und gegebenenfalls mit einer Ausfuhrleitung (9) verbunden sind.

5. Verfahren nach einem der Ansprüche 1 bis 4, **dadurch gekennzeichnet, dass** ein Gas-Flüssigkeit-Abscheider (10) vorgesehen ist, um das flüssige Medium aufzunehmen, das aus den Ableitungsmitteln (6) stammt, wobei der Ausgang (11) der Flüssigkeiten aus dem Gas-Flüssigkeit-Abscheider (10) gegebenenfalls mit der Zufuhrleitung (1) verbunden ist.

6. Verfahren nach einem der Ansprüche 1 bis 5, **dadurch gekennzeichnet, dass** eine Leitung (18) den Ausgang des Mischers (3) mit dem Zyklonreaktor (4) derart verbindet, dass das Reaktionsmedium tangential in den Zyklonreaktor (4) eintritt.

7. Verfahren nach einem der Ansprüche 1 bis 6, **dadurch gekennzeichnet, dass** Mittel zum Einführen von Luft oder einem inerten Gas in den Zyklonreaktor vorgesehen sind.

8. Verfahren nach einem der Ansprüche 1 bis 7, **dadurch gekennzeichnet, dass** das Reagens A ein Reduktionsmittel ist.

9. Verfahren nach einem der Ansprüche 1 bis 8, **dadurch gekennzeichnet, dass** das Reagens B ein Halogen umfasst, das eine Oxidationszahl größer oder gleich null aufweist.

10. Verfahren nach Anspruch 9, **dadurch gekennzeichnet, dass** das Reagens B mindestens eine Verbindung umfasst, ausgewählt aus der Gruppe bestehend aus Chlorverbindungen, Bromverbindungen und Permanganaten.

11. Verfahren nach Anspruch 10, **dadurch gekennzeichnet, dass** die Chlorverbindungen ausgewählt sind aus der Gruppe bestehend aus Chlor, Chlordioxid, Natrium- oder Calciumhypochloriten, hypochloriger Säure und den festen Formen von Chlor.

12. Verfahren nach Anspruch 10, **dadurch gekennzeichnet, dass** die Bromverbindungen ausgewählt sind aus der Gruppe bestehend aus Brom, Natrium- oder Calciumhypobromiten und hypobromiger Säure.

13. Verfahren nach einem der Ansprüche 1 bis 7, **dadurch gekennzeichnet, dass** das Reagens A ein Oxidationsmittel ist.

14. Verfahren nach Anspruch 13, **dadurch gekennzeichnet, dass** das Reagens A mindestens ein Peroxid umfasst, ausgewählt aus der Gruppe bestehend aus Wasserstoffperoxid und Peroxiden von Alkalimetallen.

15. Verfahren nach Anspruch 13 oder 14, **dadurch gekennzeichnet, dass** das Reagens A Wasserstoffperoxid umfasst.

16. Verfahren nach Anspruch 13 bis 15, **dadurch gekennzeichnet, dass** das Reagens B mindestens eine Verbindung umfasst, ausgewählt aus der Gruppe bestehend aus Natriumchlorit, Cyanidverbindungen, Schwefelverbindungen und Eisen(II).

17. Verfahren nach einem der Ansprüche 1 bis 7, **dadurch gekennzeichnet, dass** das Reagens B ein wässriger Abfluss ist, der Chlor enthält, und das Reagens A eine wässrige Lösung aus Wasserstoffperoxid umfasst.

18. Verfahren nach Anspruch 17, **dadurch gekennzeichnet, dass** der wässrige Abfluss Hypochlorit- und/oder Chlorionen umfasst.

19. Verfahren nach Anspruch 18, **dadurch gekennzeichnet, dass** der wässrige Abfluss umfasst:
1 mg/l bis 10 g/l und bevorzugt 10 mg/l bis 4 g/l Cl₂; und
1 mg/l bis 250 g/l und bevorzugt 10 mg/l bis 130 g/l NaClO.

20. Verfahren nach einem der Ansprüche 1 bis 19, **dadurch gekennzeichnet, dass** es unter den folgenden Bedingungen durchgeführt wird:
- Temperatur: 0 bis 110 °C, bevorzugt 20 bis 80 °C;
- Druck: 0,5 bis 3 Bar, bevorzugt 0,9 bis 1,3 Bar;
- pH-Wert: 1 bis 14, bevorzugt 5 bis 12;
- Verweildauer im statischen Mischer: 0,001 bis 100 Sekunden, bevorzugt 0,02 bis 10 Sekunden;
- Verweildauer im Zyklonreaktor: 10 bis 400 Sekunden, bevorzugt 20 bis 100 Sekunden; und
- der Gas-Flüssigkeit-Abscheider (10) ein Koaleszenzfilter ist, dessen Betriebsgeschwindigkeit zwischen 0,01 bis 1 m/s, bevorzugt 0,05 bis 0,8 m/s liegt.

## Claims

1. A process in which a reaction is carried out in a liquid medium during which evolution of gas occurs, **characterized in that** it comprises the following stages:
- the liquid medium is introduced into a static mixer (3), said liquid medium comprising at least two reactants A and B, through two feed pipes (1) and (2) and the reaction is allowed to begin;
- the reaction medium is transferred from the static mixer (3) to a cyclonic reactor (4) equipped with a chimney (5) for the discharge of the gas or gases formed and with means for discharge (6) of the liquid medium;
- the reaction is allowed to continue in the cyclonic reactor (4); and
- the liquid medium exiting at the bottom from the cyclonic reactor (4) is recovered by means for discharge (6); and
- the gas or gases formed is recovered by chimney (5).

2. A process as claimed in claim 1, **characterized in that** the reaction medium exiting from the static mixer (3) and introduced into the cyclonic reactor (4) has a degree of reaction progression of between 80 and 95%.

3. A process as claimed in claim 1 or 2, **characterized in that** said means for discharge of the liquid medium comprise a pipeline (6) situated at the bottom part of the cyclonic reactor (4).

4. A process as claimed in one of claims 1 to 3, **characterized in that** said discharge means (6) are connected to the feed pipe (1) and optionally to an exit pipe (9).

5. A process as claimed in one of claims 1 to 4, **characterized in that** a gas-liquid separator (10) is provided in order to receive the liquid medium originating from said discharge means (6), the outlet (11) for the liquids from the gas-liquid separator (10) being, if appropriate, connected to the feed pipe (1).

6. A process as claimed in one of claims 1 to 5, **characterized in that** a pipe (18) connects the outlet of the mixer (3) to the cyclonic reactor (4) such that the reaction medium enters the cyclonic reactor (4) tangentially.

7. A process as claimed in one of claims 1 to 6, **characterized in that** it additionally comprises means for introducing air or an inert gas into the cyclonic reactor.

8. A process as claimed in one of claims 1 to 7, **characterized in that** the reactant A is a reducing agent.

9. A process as claimed in one of claims 1 to 8, **characterized in that** the reactant B comprises a halogen having a degree of oxidation of greater than or equal to zero.

10. A process as claimed in claim 9, **characterized in that** the reactant B comprises at least one compound chosen from the group consisting of chlorinated compounds, brominated compounds and permanganates.

11. A process as claimed in claim 10, **characterized in that** the chlorinated compounds are chosen from the group consisting of chlorine, chlorine dioxide, sodium hypochlorite, calcium hypochlorite, hypochlorous acid and solid forms of chlorine.

12. A process as claimed in claim 10, **characterized in that** the brominated compounds are chosen from the group consisting of bromine, sodium hypobromite, calcium hypobromite and hypobromous acid.

13. A process as claimed in one of claims 1 to 7, **characterized in that** the reactant A is an oxidizing agent.

14. A process as claimed in claim 13, **characterized in that** the reactant A comprises, at least one peroxide chosen from the group consisting of hydrogen peroxide and alkali metal peroxides.

15. A process as claimed in claim 13 or 14, **characterized in that** the reactant A comprises hydrogen peroxide.

16. A process as claimed in one of claims 13 to 15, **characterized in that** the reactant B comprises at least one compound chosen from the group consisting of sodium chlorite, cyanide compounds, sulfur compounds and ferrous iron.

17. A process as claimed in one of claim 1 to 7, **characterized in that** the reactant B is aqueous effluent comprising chlorine and the reactant A comprises an aqueous hydrogen peroxide solution.

18. A process as claimed in claim 17, **characterized in that** the aqueous effluent comprises hypochlorite ions and/or chlorine.

19. A process as claimed in claim 18, **characterized in that** the aqueous effluent comprises:
from 1 mg/l to 10 g/l and preferably from 10 mg/l to 4 g/l of Cl₂; and
from 1 mg/l to 250 g/l and preferably from 10 mg/l to 130 g/l of NaClO.

20. A process as claimed in one of claims 1 to 19, **characterized in that** it is carried out under the following conditions:
- temperature: from 0 to 110°C, preferably from 20 to 80°C;
- pressure: 0.5 to 3 bar, preferably from 0.9 to 1.3 bar;
- pH: from 1 to 14, preferably from 5 to 12;
- residence time in the static mixer: 0.001 to 100 seconds, preferably from 0.02 to 10 seconds;
- residence time in the cyclonic reactor: 10 to 400 seconds, preferably 20 to 100 seconds; and
- the gas/liquid separator (10) is a coalescer, the operating velocity of which is from 0.01 to 1 m/s, preferably from 0.05 to 0.8 m/s.
